# EUROPÄISCHE PATENTSCHRIFT

(11) **EP 3 590 186 B1**
(45) Veröffentlichungstag und Bekanntmachung des Hinweises auf die Patenterteilung: **08.05.2024**
(21) Anmeldenummer: 18711464.0
(22) Anmeldetag: 08.02.2018
(51) Int. Cl.: H02S 40/44, F24S 20/69

(54) **VORRICHTUNG ZUR ENERGIETRANSFORMATION**
DEVICE FOR TRANSFORMING ENERGY
DISPOSITIF DE TRANSFORMATION D'ÉNERGIE

(30) Priorität: 28.02.2017 DE 102017001948
(43) Veröffentlichungstag der Anmeldung: 08.01.2020
(73) Patentinhaber: Luckow, Hans-Jürgen, 24558 Henstedt-Rhen (DE)
(72) Erfinder: Luckow, Hans-Jürgen, 24558 Henstedt-Rhen (DE)
(74) Vertreter: Klickow & Wetzel PartGmbB
(86) Internationale Anmeldenummer: PCT/DE2018/000031
(87) Internationale Veröffentlichungsnummer: WO 2018/157875

(56) Entgegenhaltungen:
- EP-A2- 0 335 261
- WO-A1-02/053990
- DE-A1- 19 803 343
- DE-A1-102009 048 086
- DE-A1-102011 054 649
- DE-U1- 29 719 900
- DE-U1-202011 004 424
- US-A1- 2012 023 841
- US-A1- 2014 083 483

## Beschreibung

Die Erfindung betrifft eine Vorrichtung zur Energietransformation, bei der auftreffende Sonnenstrahlung sowohl in elektrischen Strom als auch in Wärme transformiert wird, sowie bei der der elektrische Strom von mindestens einer Solarzelle erzeugt wird, die als Verbund aus Elementen oder Trägern und Verbindungselementen ausgebildet ist und mit elektrischen Kontaktierungen versehen ist.

Gemäß der Erfindung ist daran gedacht, eine Ausbildung als Steckmodul zu realisieren. Durch diese Ausbildung ist es möglich, dass sowohl die Kühlbohrungen als auch die elektrischen Kontaktierungen gleichzeitig zusammengefügt werden.

Heutzutage sind Vorrichtungen häufig als Solaranlagen auf Hausdächern installiert. Es gibt aber auch relativ große Anlagen, die auf dem Erdboden angeordnet sind. Bekannt sind ebenfalls bereits Anlagen, die beispielsweise unter Verwendung von Hohlspiegeln und Rohren aus der Sonnenstrahlung Wärmeenergie erzeugen, die über Rohrleitungssysteme abgeführt wird.

Bislang stellt der Stand der Technik aber noch keine Vorrichtungen bereit, die sowohl zur Erzeugung von elektrischer Energie als auch zur Erzeugung von Wärmeenergie geeignet sind und die zu einer autarken Versorgung eines Gebäudes genutzt werden können. Darüber hinaus sind auch Konstruktionen als Steckmodul bislang nicht im Markt verfügbar.

Aus der EP 03352 61 A2 ist bereits eine Vorrichtung zur Energietransformation bekannt, bei der auftreffende Sonnenstrahlung sowohl in elektrischen Strom als auch in Wärme transformiert wird. Der Strom wird von einer Solarzelle erzeugt und im Bereich eines Trägers ist ein Kanal zur Leitung eines Fluids zur Wärmeübertragung angeordnet.

Ähnliche Vorrichtungen werden auch in der DE 29719 900 U1 sowie in der DE 10 2011 054 649 A1 beschrieben.

In der US 2012/023841 A wird bereits eine Vorrichtung zur Energietransformation beschrieben, die auftreffende Sonnenstrahlung sowohl im elektrischen Strom als auch in Wärme transformiert. Es werden sowohl Solarzellen als auch Kanäle zur Leitung eines Fluids zur Wärmeübertragung verwendet. Es werden unterschiedliche Ausführungsformen beschrieben. Gemäß der Varianten in Figur 1 bis Figur 3 erfolgt eine elektrische Verbindung über Steckkontakte. Kanäle für ein Fluid werden hingegen im Bereich von ebenen Kontaktflächen gegeneinander angeordnet. Gemäß einer Ausführungsform in den Figuren 4 bis 6 werden vorstehende fluidische Steckverbindungen verwendet. Eine elektrische Kontaktierung kann über Kontaktstecker oder kabelgebunden erfolgen. Gemäß einer Ausführungsform in Figur 12 wird die Kombination von vorstehenden fluidischen Steckverbindungen und kabelgebundenen Steckverbindungen erläutert.

Die vorliegende Erfindung ermöglicht es, eine Vorrichtung der einleitend genannten Art so einzusetzen, dass die autarke Energieversorgung eines Gebäudes oder einer vergleichbaren Einrichtung unterstützt wird.

Diese Aufgabe wird erfindungsgemäß durch die Merkmale von Patentanspruch Nummer 1 gelöst.

Durch die erfindungsgemäße Konstruktion werden somit Transformationsmöglichkeiten von Sonnenstrahlung gleichzeitig in elektrische Energie als auch in Wärmeenergie miteinander kombiniert.

Zur Unterstützung eines Wärmemittelkreislaufes wird vorgesehen, dass sich mindestens ein Kanal in einer Längsrichtung des Elementes bzw. des Trägers oder gitterartig erstreckt.

Alternativ ist auch vorgesehen, dass die Kanäle quer oder schräge oder in Schlangenlinien verlaufen können.

Eine Verlegung in einem Verbund wird dadurch unterstützt, dass das Element oder der Träger für jeden der Kanäle mindestens eine Kopplung aufweist.

Eine elektrische Kontaktierung wird dadurch erreicht, dass das Element oder der Träger mit mindestens einer elektrischen Kopplung versehen ist.

Hinsichtlich der Leitung des Fluids, beispielsweise Kältemittel, ist vorgesehen, dass zur Kopplung von Kanälen mindestens eine Buchse und mindestens ein Stopfen verwendet sind.

Gemäß nach einem typischen Anwendungsfall ist vorgesehen, dass das Element oder der Träger eine pfannenartige oder dachziegelartige Gestaltung aufweist.

Eine preiswerte Fertigung wird dadurch unterstützt, dass das Element oder der Träger aus einem Stück aus Kunststoff oder einem anderen Material gefertigt ist.

Eine bevorzugte Anwendung besteht darin, dass die Vorrichtung zur autarken Energieversorgung eines Gebäudes verwendet ist.

Großflächige Verlegungen werden dadurch unterstützt, dass in einem aus einer Vielzahl von Elementen oder Trägern hergestellten Verbund in einer untersten Reihe Umleitungen für die Kanäle angeordnet sind.

Ebenfalls ist daran gedacht, dass in einem aus einer Vielzahl von Elementen oder Trägern hergestellten Verbund in einer oberen Reihe Umleitungen für die Kanäle angeordnet sind.

Es kann auch durch eine andere Herstellungsart ein Element oder Träger verwendet werden, bei dem die Solarzelle entweder angeschweißt, aufgeklebt, angeklippt, eingerastet oder angespritzt wird.

Verschiedene Ausführungsbeispiele und Ausgestaltungen sind in der nachfolgenden Figuren abgebildet. Es zeigen:

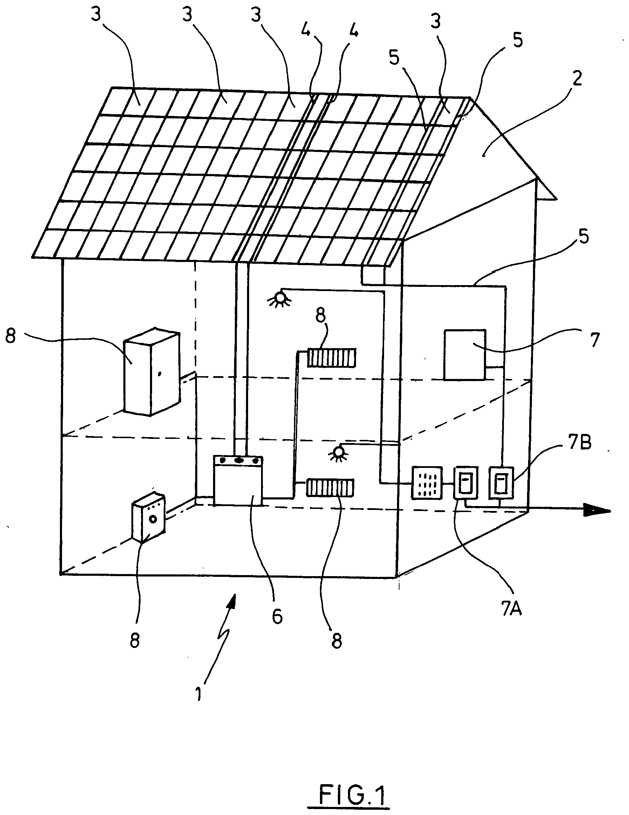

- Figur 1: eine schematische Darstellung eines mit der erfindungsgemäßen Vorrichtung ausgerüsteten Gebäudes,

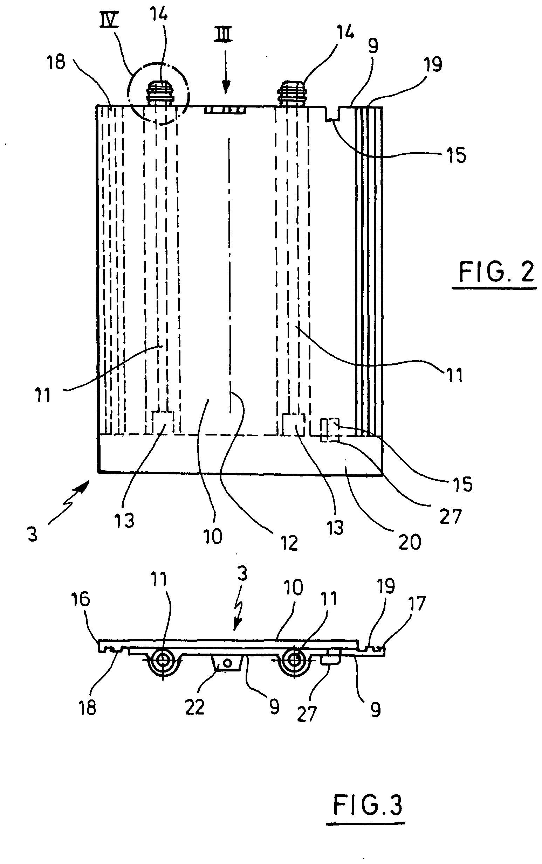

- Figur 2: eine Draufsicht auf eine Vorrichtung
- Figur 3: eine Seitenansicht gemäß Blickrichtung III. in Figur 2,

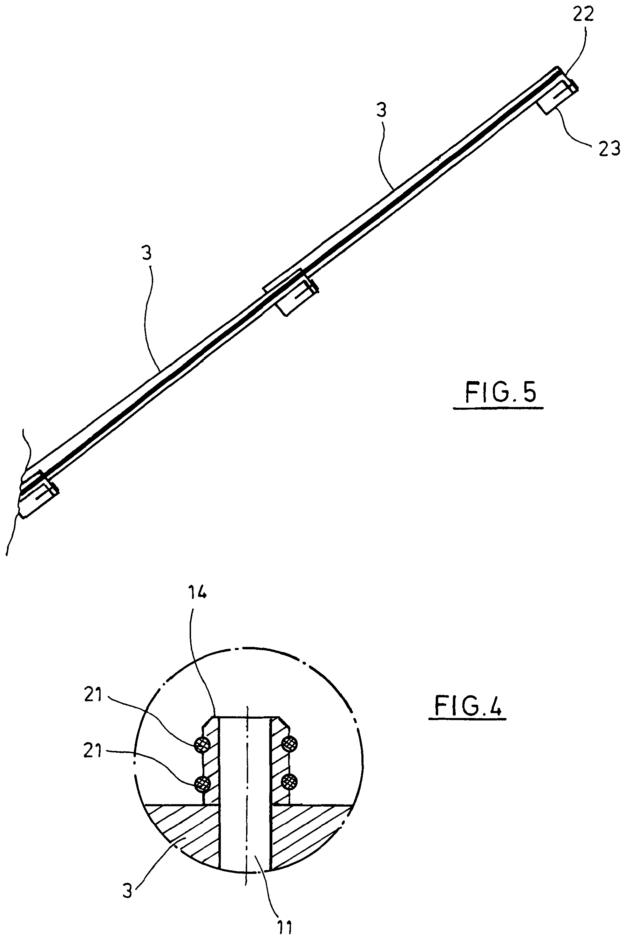

- Figur 4: eine vergrößerte Darstellung der Einzelheit IV. in Figur 2,
- Figur 5: eine schematische Darstellung von dachpfannenartig oder dachziegelartig verlegten Vorrichtungen,

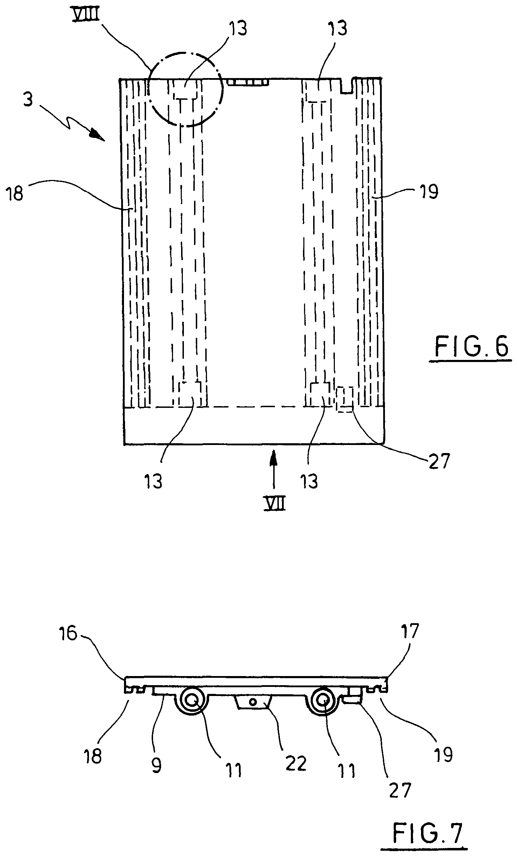

- Figur 6: eine gegenüber Figur 2 abgewandelte Ausführungsform,
- Figur 7: eine Seitenansicht gemäß Blickrichtung VII. in Figur 6,

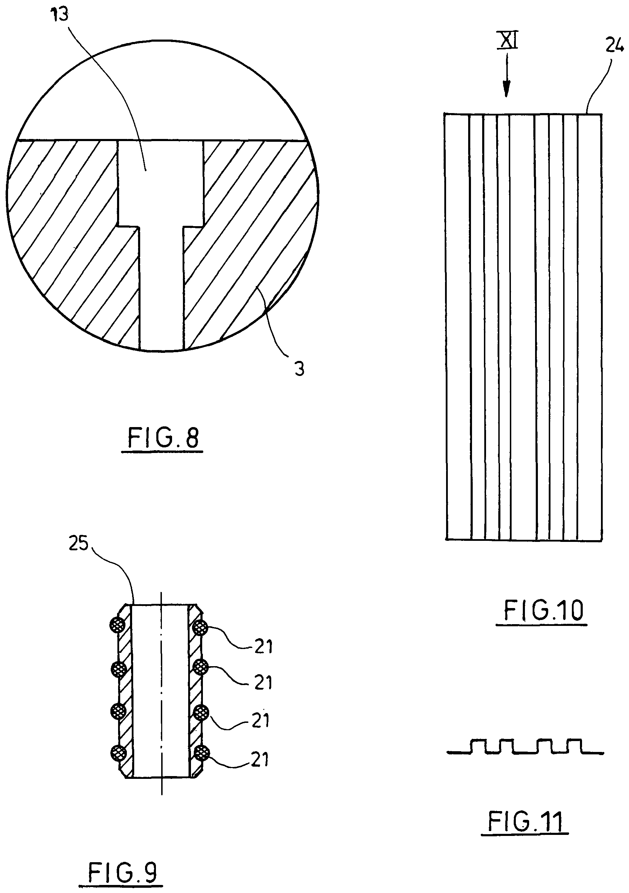

- Figur 8: eine vergrößerte Darstellung der Einzelheit VIII. in Figur 6,
- Figur 9: eine vergrößerte Darstellung eines Kopplungselementes,
- Figur 10: eine Draufsicht auf ein Basiselement zur Unterstützung eines verbundartigen Verlegens von Vorrichtungen gemäß Figur 6,
- Figur 11: eine Seitenansicht gemäß Blickrichtung XI. in Figur 10,

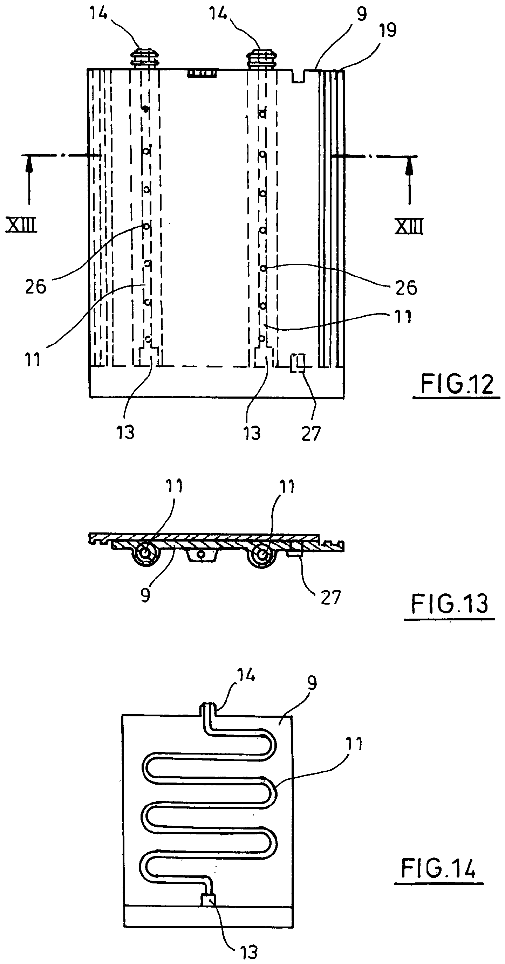

- Figur 12: eine Draufsicht auf eine andere Ausführungsform der erfindungsgemäßen Vorrichtung,
- Figur 13: einen Querschnitt gemäß Schnittlinie XIII. in Figur 12 und
- Figur 14: eine schematische Darstellung einer Vorrichtung mit einer schlangenartigen Verlegung mindestens eines Strömungskanals.

Gemäß der Darstellung in Figur 1 sind im Bereich eines Gebäudes (1) auf einem Dach (2) eine Mehrzahl von Elementen (3) oder Träger (9) angeordnet. Die Elemente (3) oder Träger (9) sind hierbei pfannenartig oder dachziegelartig angeordnet und weisen sowohl Hohlräume (4) zum Transport eines Fluids, beispielsweise Kältemittel, als auch elektrische Leitungen (5) auf. Die Hohlräume (4) oder Kanäle (11) sind mit einem Reservoir (6) und die elektrischen Leitungen (5) mit einem Energiespeicher (7) gekoppelt.

Das Reservoir (6), beispielsweise als Wärmepumpe, kann als Heißwasserspeicher verwendet und mit verschiedenen Verbrauchern (8) verbunden werden. An den Energiespeicher (7) können elektrische Verbraucher (7A) angeschlossen sein, ebenfalls ist eine Energieübertragung an ein externes Versorgungsnetz möglich, beispielsweise über einen Transformator (7B).

Gemäß der Darstellung in Figur 2 bestehen die Elemente (3) aus einem Stück oder aus einem Träger (9), der mindestens eine Solarzelle (10) haltert. Die Solarzelle (10) kann hierbei in einem einheitlichen Fertigungsprozess gleichzeitig mit dem Träger (9) gefertigt werden, beispielsweise durch Spritzguss oder Extrusion. Es ist aber auch möglich, zunächst den Träger (9) herzustellen und dann die Solarzelle (10) beispielsweise anzuschweißen, aufzukleben, anzuklippen, einzurasten oder anzuspritzen. Die Solarzelle (10) und/oder der Träger (9) können entweder aus Kunststoff oder aus einem anderen Material gefertigt werden.

Durch das Element (3) beziehungsweise dem Träger (9) hindurch erstreckt sich mindestens ein Kanal (11), gemäß dem Ausführungsbeispiel in Figur 2 sind zur Bereitstellung der Hohlräume (4) zwei Kanäle (11) vorgesehen, die sich in einer Längsrichtung (12) erstrecken und im Wesentlichen parallel zueinander und mit einem Abstand zueinander angeordnet sind. Zur Verbindung von Kanälen (11) miteinander sind gemäß dem Ausführungsbeispiel in Figur 2 Buchsen (13) und vorstehende Stopfen (14) vorgesehen, die geometrisch aneinander angepasst sind. Für eine elektrische Kontaktierung sind Kopplungselemente (15) verwendet, die beispielsweise als Buchsen und Stecker realisiert sein können.

Gemäß dem Beispiel in Figur 3 weisen die Elemente (3) oder die Träger (9) an ihren Längsseiten (16,17) Profilierungen (18, 19) auf, die aneinander angepasst sind und beispielsweise eine Verlegung ähnlich zu sogenannten Frankfurter Pfannen ermöglichen. Darüber hinaus weisen die Elemente (3) oder die Träger (9) zur Unterstützung einer überdeckenden Verlegung Absätze (20) auf.

Figur 3 zeigt eine Seitenansicht des Elementes (3) oder des Trägers (9) gemäß Blickrichtung III. in Figur 2. Es ist zu erkennen, dass bei diesem Beispiel die Kanäle (11) am Element (3) oder am Träger (9) angeformt sind. Ebenfalls ist die Anordnung mindestens eines Vorsprunges (22) zwischen zwei Kanälen (11) vorzusehen.

Figur 3 veranschaulicht darüber hinaus die Anordnung der Solarzelle (10) auf dem Element (3) oder dem Träger (9). Darüber hinaus sind im Bereich von Längsseiten (16, 17) Profilierungen (18, 19) zu erkennen, die zu einer überdeckenden Anordnung der Elemente (3) oder der Träger (9) entsprechend von Dachpfannen oder Dachziegeln verwendet werden können.

Figur 4 zeigt eine vergrößerte Darstellung eines Stopfens (14). Der Stopfen (14) ist mit Dichtungen (21) versehen. Die Dichtungen (21) können beispielsweise als O-Ringe ausgeführt sein. Grundsätzlich ist eine derartige Dichtung (21) ausreichend, das Ausführungsbeispiel zeigt die Verwendung von zwei Dichtungen (21).

Alternativ zur bereits beschriebenen Realisierung der Dichtungen (21) als O-Ringe ist es beispielsweise auch möglich, sogenannte Lippendichtungen oder beide Dichtungsarten zu verwenden oder die Dichtungen (21) anzuspritzen.

Ähnlich zur Darstellung in Figur 2 wird das Element (3) oder der Träger (9) entsprechend der Darstellung in den Figuren 12 und/oder 13 mit mindestens einer Bohrung oder einem andersartigen Zugang pro Kanal (11) oder Hohlraum (4) versehen. Die Anzahl und die Größe der Bohrungen richten sich danach, ob das Element (3) oder der Träger (9) als Sprinkleranlage oder zur Bewässerung von Gewächshäusern oder zur Bewässerung von Wallbepflanzungen eingesetzt wird.

Wie bereits erwähnt, können die Kanäle (11) im Element (3) oder im Träger (9) quer oder schräg oder in Schlangenlinien oder gitterartig verlaufen.

Figur 14 zeigt zur weiteren Verdeutlichung einen schlangenförmigen Kanal (11) für die Kühlflüssigkeit. Hierbei können die Elemente (3) oder der Träger (9) in einem dreidimensionalen Foto-Druck-Verfahren hergestellt werden. Die Elemente (3) oder der Träger (9) können auch zweiteilig, beispielsweise in einem Spritzgießverfahren, hergestellt werden. Insbesondere ist hierbei daran gedacht, die Kontur der Kanäle (11) oder der Bohrungen zum einen bereits vorab zu generieren oder nachträglich einzuarbeiten. Die beiden Hälften der Elemente (3) oder des Trägers (9) können danach zusammengeklebt oder verschweißt werden.

Alternativ zu einer unmittelbaren Herstellung der Bohrungen oder der andersartigen Zugänge ist auch daran gedacht, lediglich mindestens eine Markierung (26), beispielsweise Bohrkegel oder kleine Vertiefungen, an den hierfür vorgesehenen Positionen zu generieren und die Bohrungen oder die Ausnehmungen in einem zweiten Fertigungsschritt oder bedarfsabhängig vor Ort herzustellen.

Figur 5 veranschaulicht in einer Seitenansicht eine einander teilweise überdeckende Anordnung von Elementen (3) oder Trägern (9) entsprechend einer Verlegung von Dachpfannen oder Dachziegeln. Zur Unterstützung einer ausreichend sicheren Befestigung können die Elemente (3) oder Träger (9) mindestens einen Vorsprung (22) aufweisen, die beispielsweise eine Vernagelung oder eine Verschraubung an die Dachlatten (23) unterstützen. Alternativ kann statt des Vorsprunges (22) ein U-Profil verwendet werden, welches unter der Dachlatte einrastet.

Figur 6 zeigt eine gegenüber Figur 2 abgewandelte Ausführungsform. Es ist hier eine Verlegung der Elemente (3) oder der Träger (9) nebeneinander vorgesehen und keine seitlich überlappende Verlegung. Eine derartige Verlegung wird durch das in Figur 10 dargestellte Verbindungselement (24) unterstützt. Das Verbindungselement (24) kann beispielsweise aus einem elastomeren Material, aus Kunststoff oder einem anderen Material ausgebildet sein. Eine Herstellung kann beispielsweise in einem Extrusionsprozess oder im Spritzgießverfahren erfolgen.

Gemäß einer weiteren Abwandlung in Figur 6 sind im Bereich beider Querseiten Buchsen (13) angeordnet, die mit Hülsen oder Steckern (25) miteinander verbindbar sind. Die Hülsen oder Stecker (25) tragen hierbei die Dichtungen (21). Beim dargestellten Ausführungsbeispiel sind insgesamt vier Dichtungen (21) verwendet.

Die vergrößerte Darstellung in Figur 8 zeigt eine Buchse (13) zur Aufnahme einer derartigen Hülse oder Steckers (25).

Die Seitenansicht in Figur 7 zeigt die Anordnung der Kanäle (11) im Bereich des Elementes (3) oder Trägers (9) sowie die profilierte Gestaltung (18, 19) des Elementes (3) oder des Trägers (9) im Bereich der Längsseiten (16, 17). Die Seitenansicht in Figur 11 zeigt die korrespondierende Ausbildung des Verbindungselementes (24).

Alternativ zur bereits erläuterten Verwendung ähnlich zu Dachpfannen oder Dachziegeln ist es auch möglich, die Elemente (3) oder Träger (9) beispielsweise zur Verkleidung von Gebäudewänden oder Gebäudegiebeln zu verwenden. Ebenfalls kann beispielsweise in Kombination mit einer Wärmepumpe eine Verwendung als Sohle erfolgen.

Als Fluid kann zum einen Wasser verwendet werden. Darüber hinaus ist auch an die Verwendung von Salzlösungen, Alkohol, Glycerin, Kältemittel oder geeigneter Gase gedacht.

Ebenfalls ist es möglich, Anwendungen im Bereich einer Sprinkleranlage vorzusehen. Auch die Stromerzeugung und Bewässerung bei Gewächshäusern und die Bewässerung von Hecken oder Wallbepflanzungen sind möglich. Beide Varianten sind für Einfassungen oder Überdeckungen realisierbar.

Figur 11 zeigt eine Seitenansicht des Verbindungselementes (24) gemäß Blickrichtung XI. in Figur 10. Es ist hier insbesondere die Profilierung zu erkennen, um einen Formschluss mit den Elementen (3) oder Trägern (9) zu erreichen.

Gemäß der vergrößerten Darstellung in Figur 9 ist die Hülse oder der Stecker (25) mit vier Dichtungen (21) versehen. Grundsätzlich ist aber auch hier im Bereich jedes Endbereiches die Anordnung einer Dichtung (21), beispielsweise als O-Ring und/oder Lippendichtung, ausreichend.

Außerdem ist es möglich, die Stopfen (14) mit den Buchsen (13) zu verpressen, zu verkleben oder zu verschweißen.

Figur 12 zeigt als Beispiel die Verwendung von 14 Markierungen (26). Wenn sich durch hohe Temperaturschwankungen Undichtigkeiten in den Elementen (3) oder Trägern (9) ergeben sollten, können auch Kupferrohre durch die Kanäle (11) bzw. Hohlräume (4) der gesamten Dachfläche geschoben und montiert werden. Die Kupferrohre werden dann in der oberen und unteren Reihe umgelenkt und miteinander verbunden. Dies kann beispielsweise durch Schweißen, Löten, Verpressen oder Kleben erfolgen. Diese Art der Verlegung könnte auch von Anfang an erfolgen. Die Dachpfannen oder Dachziegel könnten auch Halterungen aufweisen um dort die Kupferrohre zu haltern bzw. anzuklippen oder einzurasten. Alternativ können die Kupferrohre auch aus anderen Materialien wie z.B. aus Kunststoff bestehen. Alternativ oder ergänzend können in den Kanälen (11) oder den Hohlräumen (4) auch Schläuche angeordnet werden.

Die Kühlungen der Kanäle (11) oder Hohlräume (4) tragen nicht nur zur Wärmerückgewinnung bei, sondern erhöhen auch die Leistung der Solarzellen. Ebenfalls werden hierdurch Überhitzungen der Solarzellen vermieden. Außerdem passen die Solarzellen, die wie Dachpfannen oder Dachziegel aussehen, besser in das architektonische Gesamtbild und sehen ästhetischer aus. Durch das Ineinanderstecken der Elemente (3) oder Träger (9) und die Vernagelung oder Verschraubung an die Dachlatten ist das Dach zusätzlich besser gegen Sturm und Einbruch geschützter.

Wie bereits erwähnt, erfolgt durch ein Zusammenschieben der Stopfen (14) und der Buchsen (13) die Herstellung eines Verbundes von Elementen (3) oder Trägern (9). Das Zusammenschieben erfolgt hierbei in Richtung der Längsachse (12). Durch dieses Zusammenstecken erfolgt eine Festlegung der Elemente (3) oder Träger (9) sowohl quer zur Längsrichtung (12) als auch senkrecht zur Längsrichtung (12) aus der aufgespannten Fläche heraus. Bei einer Verbindung der Vorsprünge (22) mit Dachlatten erfolgt eine zusätzliche Festlegung des gesamten Verbundes senkrecht zur Dachfläche zur Erreichung einer Verlegestabilität sowie zur Verbesserung der Einbruchssicherheit und die Beständigkeit gegenüber von Sturm. Darüber hinaus wird die Gefahr eines Verziehens durch Temperatur- oder Witterungseinwirkungen oder wegen Alterung vermindert.

Eine Stabilisierung des Verbundes in Richtung der Längsachse (12) erfolgt durch die Absätze (20) und die hierdurch bereitgestellten Anschlagkanten. Aus einer Kombination der Figuren 2 und 3 ist zusätzlich erkennbar, dass die in Figur 3 zu erkennenden Vorsprünge (22) sowie Haltestege (27) zusätzlich die Stabilität des Verbundes unterstützen.

Insgesamt weisen somit die Elemente (3) bzw. die Träger (9) eine Mehrzahl von Profilierungen auf, die ineinandergreifen und hierdurch die Bereitstellung eines stabilen Verbundes in mehreren räumlichen Richtungen unterstützen.

Die bereits erwähnte Konstruktion der Elemente (3) oder der Träger (9) als Steckmodule erfolgt insbesondere derart, dass eine Serienfertigung unterstützt ist.

Darüber hinaus wird das Montieren der Bauelemente vor Ort an einer jeweiligen Baustelle durch das Stecksystem erleichtert. Hieraus resultierten eine wirtschaftliche Herstellung sowie eine einfache Verlegung.

Das Zusammenstecken der Elemente (3) oder der Träger (9) führt dazu, dass sowohl die Kühlbohrungen als auch die elektrischen Kontaktierungen in einem Arbeitsschritt zusammengefügt werden. Hierdurch kann der wesentliche Teil des Verbundes in einfacher Art und Weise hergestellt werden. Zusätzlich ist es lediglich erforderlich, im Bereich der untersten Reihe oder der obersten Reihe eine Umlenkung der Kühlkanäle und der elektrischen Kontaktierungen zu erreichen. Dies kann entweder durch die bereits beschriebenen speziellen Bauelemente oder durch die Verwendung zusätzlicher Umleitungselemente erfolgen.

Alternativ zum bereits erwähnten Zusammenstecken der Module in Längsrichtung ist es auch möglich, ein Zusammenstecken in einer Querrichtung zu realisieren.

Sollten Elemente (3) oder Träger (9) innerhalb des Verbundes ausgewechselt werden müssen, so kann dies sehr schnell in einem Arbeitsvorgang erfolgen, bei dem die Steckmodule vom Dachfirst aus nach oben gezogen werden. Vorab wird hierbei die Vernagelung oder die Verschraubung gelöst. Die Steckmodule können hierdurch bis zur unteren Reihe jeweils etwas nach oben gezogen und danach rausgedreht werden.

Bei einer alternativen Konstruktion bei der die Steckmodule quer zusammengesteckt werden, kann das Rausziehen nach rechts oder nach links erfolgen.

Alternativ zur bereits erwähnten Herstellung der Buchsen (13) und der Stecker (14) aus Kunststoff ist es auch möglich, diese aus Keramik herzustellen. Keramik besitzt eine lediglich geringe thermische Ausdehnung. Entsprechende Bauteile aus Keramik können beispielsweise als Einlegeteile in das Element (3) oder den Träger (9) eingefügt werden. Darüber hinaus können diese auch in einem Extrusionsprozess oder in einem Spritzgießverfahren gleichzeitig hergestellt werden. Darüber hinaus ist auch daran gedacht, die Hülsen oder die Stecker (25) aus Keramik herzustellen. Schließlich ist es auch möglich, die Buchsen (13) oder die Stecker (14) sowie die Hülsen und die Stecker (25) aus anderen Materialien zu produzieren.

Gemäß einer anderen Ausführungsform wird statt des Vorsprungs (22) ein Winkel oder ein U-Profil verwendet. Ein derartiger Winkel oder das U-Profil kann aus Stahl oder einem anderen Material hergestellt sein. Ebenfalls ist es möglich, den Winkel oder das U-Profil aus Draht zu formen und diesen mit den Elementen (3) oder den Trägern (9) zu verbinden. Anschließend erfolgt eine Befestigung an den Dachlatten.

Gemäß einer weiteren Ausführungsform ist daran gedacht, das Element (3) oder den Träger (9) von oben oder seitlich, insbesondere an einer Breitseite oder einer Schmalseite der Dachlatten entweder direkt oder zusammen mit den Winkeln oder den U-Profilen an die Dachlatten zu nageln oder zu schrauben.

Im Hinblick auf die bereits erwähnte Querverlegung der Elemente (3) oder der Träger (9) verlaufen die Kühlbohrungen (11) bzw. Hohlräume (4) von einer Dachseite zur anderen Dachseite durchgehend. Hierdurch wird auch bei dieser Variante die Einbringung von Rohrleitungen oder von Schläuchen durch die Kühlbohrungen (11) bzw. Hohlräume (4) hindurch ermöglicht. An den Dachseiten links und rechts werden wie bereits erwähnt Umlenkungen vorgenommen, entweder integriert oder durch separate Umleitungselemente.

Die Umlenkungen in der obersten und untersten Reihe können auch über die Buchsen (13) und Stecker (14) beziehungsweise Hülsen (25) direkt von einer Dachpfanne oder einem Dachziegel in die danebenliegende Dachpfanne oder Dachziegel erfolgen. Gemäß einer bevorzugten Ausführungsform wird die Vorrichtung zur autarken Energieversorgung eines Gebäudes verwendet.

## Patentansprüche

1. Vorrichtung zur Energietransformation, bei der auftreffende Sonnenstrahlung sowohl in elektrischen Strom als auch in Wärme transformiert wird, sowie bei der der elektrische Strom von mindestens einer Solarzelle erzeugt wird, die als Verbund aus Elementen (3) oder Trägern (9) und Verbindungselementen ausgebildet ist und mit elektrischen Kontaktierungen versehen ist, sowie bei der im Bereich der jeweiligen Elemente (3) oder der Träger (9) mindestens ein Kanal (11) zur Leitung eines Fluids, beispielsweise Kältemittels, zur Wärmeübertragung angeordnet ist, wobei die Elemente (3) oder die Träger (9) als Steckmodul ausgebildet sind wobei das Steckmodul sowohl mit mindestens einem Kühlkanal (11) als auch mit mindestens einem elektrischen Kontakt versehen ist und wobei mindestens zwei Steckmodule in einer Längsrichtung zusammengefügt sind, wobei sowohl die Kühlbohrungen als auch die elektrischen Kontaktierungen durch das Zusammenschieben in Längsrichtung in einem Arbeitsschritt zusammengefügt sind, wobei zur Kopplung von den Kanälen (11) mindestens eine Buchse (13) und mindestens ein an die Buchse (13) angepasster Vorsprung (14) verwendet sind, wobei die Buchsen (13) in den Elementen (3) oder Trägern (9) als Bohrungen angeordnet sind, wobei die Elemente (3) oder Träger (9) Absätze aufweisen, wobei seitliche Überdeckungen der Elemente (3) oder Träger (9) mit den Verbindungselementen (24) realisiert sind und wobei eine überdeckende Verlegung der Elemente (3) oder der Träger (9) in der Längsrichtung durch die Absätze (20) realisiert ist, wobei die seitlichen Überdeckungen der Elemente (3) oder Träger (9) mit den Verbindungselementen (24) von Profilierungen im Bereich von Längsseiten (16, 17) der Elemente (3) oder der Träger (9) realisiert sind, und wobei zur Erreichung einer Verbindung von nebeneinander angeordneten Elementen (3) oder Trägern (9) die Verbindungselemente (24) angeordnet sind, wobei die Verbindungselemente (24) korrespondierend zu den profilierten Gestaltungen der Elemente (3) oder Träger (9) im Bereich deren Längsseiten (16, 17) ausgebildet sind, und wobei die Absätze (20) Anschlagkanten ausbilden, und wobei die Elemente (3) oder Träger (9) zur Unterstützung einer Befestigung mindestens einen Vorsprung (22) oder mindestens ein U-Profil aufweisen.

2. Vorrichtung nach Anspruch 1, **dadurch gekennzeichnet, dass** die Kanäle (11) sich in einer Längsrichtung (12) der Elemente (3) oder der Träger (9) erstrecken.

3. Vorrichtung nach Anspruch 1 bis 2, **dadurch gekennzeichnet, dass** die Elemente (3) oder die Träger (9) für jeden der Kanäle (11) mindestens eine Kopplung aufweisen.

4. Vorrichtung nach Anspruch 1 bis 3, **dadurch gekennzeichnet, dass** die Elemente (3) oder die Träger (9) mit mindestens einer elektrischen Kopplung versehen sind.

5. Vorrichtung nach einem der Ansprüche 1 bis 4, **dadurch gekennzeichnet, dass** die Elemente (3) oder die Träger (9) eine pfannenartige oder dachziegelartige Gestaltung aufweisen.

6. Vorrichtung nach einem der Ansprüche 1 bis 5, **dadurch gekennzeichnet, dass** in dem aus der Vielzahl von Elementen (3) oder Trägern (9) hergestellten Verbund in einer untersten Reihe Umleitungen für die Kanäle (11) angeordnet sind.

7. Vorrichtung nach einem der Ansprüche 1 bis 5, **dadurch gekennzeichnet, dass** in dem aus der Vielzahl von Elementen (3) oder Trägern (9) hergestellten Verbund in einer obersten Reihe Umleitungen für die Kanäle (11) angeordnet sind.

8. Vorrichtung nach einem der Ansprüche 1 bis 7, **dadurch gekennzeichnet, dass** in dem aus der Vielzahl von Elementen (3) oder Trägern (9) hergestellten Verbund durch eine Kombination von Steckverbindungen und von Vorsprüngen (22) und von den Haltestegen (27) eine dreidimensionale Festlegung realisiert ist.

9. Vorrichtung nach einem der Ansprüche 1 bis 8, **dadurch gekennzeichnet, dass** durch eine Kombination von den Absätzen (20) und den Vorsprüngen (22) sowie Haltestegen (27) die Ausbildung des Verbundes unterstützt ist.

10. Vorrichtung nach einem der Ansprüche 1 bis 9, **dadurch gekennzeichnet, dass** die Elemente (3) oder die Träger (9) aus Kunststoff oder einem anderen Material gefertigt sind.

## Claims

1. Device for transforming energy, in which incident solar radiation is transformed both into electric current and into heat and also in which the electric current is generated by at least one solar cell which is designed as a combination of elements (3) or supports (9) and connecting elements and is provided with electrical contact-making means, and also in which at least one channel (11) for conducting a fluid, for example refrigerant, for heat transfer is arranged in the region of the respective elements (3) or the supports (9), wherein the elements (3) or the supports (9) are designed as a plug-in module, wherein the plug-in module is provided both with at least one cooling channel (11) and with at least one electrical contact and wherein at least two plug-in modules are joined in a longitudinal direction, wherein both the cooling bores and the electrical contact-making means are joined by being pushed together in the longitudinal direction in one working step, wherein at least one socket (13) and at least one projection (14) which is matched to the socket (13) are used for coupling the channels (11), wherein the sockets (13) are arranged as bores in the elements (3) or supports (9), wherein the elements (3) or supports (9) have steps, wherein lateral overlappings of the elements (3) or supports (9) with the connecting elements (24) are realized and wherein overlapping laying of the elements (3) or the supports (9) in the longitudinal direction is realized by the steps (20), wherein the lateral overlappings of the elements (3) or supports (9) with the connecting elements (24) are realized by profilings in the region of longitudinal sides (16, 17) of the elements (3) or the supports (9), and wherein the connecting elements (24) are arranged for establishing a connection between elements (3) or supports (9) arranged next to each other, wherein the connecting elements (24) are designed in a manner corresponding to the profiled configurations of the elements (3) or supports (9) in the region of their longitudinal sides (16, 17), and wherein the steps (20) form stop edges, and wherein the elements (3) or supports (9) have at least one projection (22) or at least one U-profile for assisting fastening.

2. Device according to Claim 1, **characterized in that** the channels (11) extend in a longitudinal direction (12) of the elements (3) or the supports (9).

3. Device according to Claims 1 to 2, **characterized in that** the elements (3) or the supports (9) have at least one coupling for each of the channels (11).

4. Device according to Claims 1 to 3, **characterized in that** the elements (3) or the supports (9) are provided with at least one electrical coupling.

5. Device according to any of Claims 1 to 4, **characterized in that** the elements (3) or the supports (9) have a pan-like or roof tile-like configuration.

6. Device according to any of Claims 1 to 5, **characterized in that** bypasses for the channels (11) are arranged in a lowermost row in the combination produced from the large number of elements (3) or supports (9).

7. Device according to any of Claims 1 to 5, **characterized in that** bypasses for the channels (11) are arranged in an uppermost row in the combination produced from the large number of elements (3) or supports (9).

8. Device according to any of Claims 1 to 7, **characterized in that** three-dimensional fixing is realized in the combination produced from the large number of elements (3) or supports (9) by combining plug-in connections and projections (22) and the holding webs (27) .

9. Device according to any of Claims 1 to 8, **characterized in that** the formation of the combination is assisted by combining the steps (20) and the projections (22) and also holding webs (27).

10. Device according to any of Claims 1 to 9, **characterized in that** the elements (3) or the supports (9) are produced from plastic or another material.

## Revendications

1. Dispositif de transformation d'énergie, dans lequel le rayonnement solaire incident est transformé aussi bien en courant électrique qu'en chaleur, et dans lequel le courant électrique est généré par au moins une cellule solaire, qui est conçue comme un composite formé d'éléments (3) ou de supports (9) et d'éléments de liaison et qui est pourvue de contacts électriques, et dans lequel au moins un conduit (11) destiné à conduire un fluide , par exemple un réfrigérant, en vue du transfert de chaleur, est prévu dans la zone des éléments respectifs (3) ou des supports (9), les éléments (3) ou les supports (9) étant conçus sous la forme d'un module enfichable, le module enfichable étant pourvu d'au moins un conduit de refroidissement (11) et d'au moins un contact électrique et au moins deux modules enfichables étant reliés ensemble dans la direction longitudinale, les trous de refroidissement ainsi que les contacts électriques étant assemblés en une seule étape de travail par coulissement conjoint dans la direction longitudinale, au moins une douille (13) et au moins une saillie (14) adaptée à la douille (13) étant utilisées pour accoupler les conduits (11), les douilles (13) étant disposées sous la forme de perçages dans les éléments (3) ou supports (9), les éléments (3) ou supports (9) comportant des épaulements, des chevauchements latéraux des éléments (3) ou supports (9) étant réalisés avec les éléments de liaison (24) et une pose superposée des éléments (3) ou des supports (9) dans la direction longitudinale étant effectuée par les épaulements (20), les chevauchements latéraux des éléments (3) ou supports (9) avec les éléments de liaison (24) étant réalisés par des profilés dans la zone des grands côtés (16, 17) des éléments (3) ou des supports (9), et les éléments de liaison (24) étant disposés de manière à réaliser une liaison entre des éléments (3) ou des supports (9) disposés les uns à côté des autres, les éléments de liaison (24) étant conçus pour correspondre aux formes profilées des éléments (3) ou supports (9) dans la zone de leurs grands côtés (16, 17), et les épaulements (20) formant des bords de butée, et les éléments (3) ou supports (9) comportant au moins une saillie (22) ou au moins un profil en U pour supporter une fixation.

2. Dispositif selon la revendication 1, **caractérisé en ce que** les conduits (11) s'étendent suivant une direction longitudinale (12) des éléments (3) ou des support (9).

3. Dispositif selon les revendications 1 à 2, **caractérisé en ce que** les éléments (3) ou les supports (9) comportent au moins un accouplement pour chacun des conduits (11).

4. Dispositif selon les revendications 1 à 3, **caractérisé en ce que** les éléments (3) ou les supports (9) sont pourvus d'au moins un accouplement électrique.

5. Dispositif selon l'une des revendications 1 à 4, **caractérisé en ce que** les éléments (3) ou les supports (9) sont conçus sous la forme d'une tuile en S ou d'une tuile plate.

6. Dispositif selon l'une des revendications 1 à 5, **caractérisé en ce que** des dérivations destinées aux conduits (11) sont disposées en une rangée inférieure dans le composite formé du grand nombre d'éléments (3) ou de supports (9).

7. Dispositif selon l'une des revendications 1 à 5, **caractérisé en ce que** des dérivations destinées aux conduits (11) sont disposées en une rangée supérieure dans le composite formé du grand nombre d'éléments (3) ou de supports (9).

8. Dispositif selon l'une des revendications 1 à 7, **caractérisé en ce qu'**une conception tridimensionnelle est réalisée dans le composite, formé du grand nombre d'éléments (3) ou de supports (9), par une combinaison de liaisons par enfichage et de saillies (22) et de nervures de retenue (27).

9. Dispositif selon l'une des revendications 1 à 8, **caractérisé en ce que** la formation du composite est favorisée par une combinaison des épaulements (20) et des saillies (22) ainsi que des nervures de retenue (27) .

10. Dispositif selon l'une des revendications 1 à 9, **caractérisé en ce que** les éléments (3) ou les supports (9) sont en une matière synthétique ou en une autre matière.
